# EUROPÄISCHE PATENTSCHRIFT

(11) **EP 0 774 602 B1**
(45) Veröffentlichungstag und Bekanntmachung des Hinweises auf die Patenterteilung: **21.03.2001**
(21) Anmeldenummer: 96115266.7
(22) Anmeldetag: 24.09.1996
(51) Int. Cl.: F16H 61/36

(54) **Aussenschaltvorrichtung für ein Wechselgetriebe eines Kraftfahrzeuges**
Gear selector lever for a vehicle transmission
Levier de commande de boîte de vitesse pour véhicules automobiles

(30) Priorität: 15.11.1995 DE 19542555
(43) Veröffentlichungstag der Anmeldung: 21.05.1997
(73) Patentinhaber: ZF Lemförder Metallwaren AG, 49448 Lemförde (DE)
(72) Erfinder: Ersoy, Metin, Dr.-Ing., 65396 Walluf (DE)

(56) Entgegenhaltungen:
- DE-A- 4 101 010
- US-A- 3 997 040
- US-A- 5 005 411

## Beschreibung

Die Erfindung bezieht sich auf eine Außenschaltvorrichtung für ein Wechselgetriebe eines Kraftfahrzeuges nach dem Oberbegriff des Patentanspruches 1.

Bekannt ist eine Außenschaltvorrichtung aus der DE 41 28 161 A1. Es ist eine Besonderheit dieser Schaltvorrichtungen, daß die in mehreren Schaltebenen vorzugsweise in Fahrzeuglängsrichtung ausgeführte Schaltbewegung des Schalthebels und die demgegenüber quer zur Fahrzeuglängsrichtung ausgeführte Wählbewegung des Schalthebels durch zwei in Fahrzeuglängsrichtung bewegliche Übertragungsglieder auf das Wechselgetriebe, insbesondere auf eine Schaltstange des Wechselgetriebes, übertragen werden. Daraus ergibt sich die Notwendigkeit, für die quer zur Fahrzeuglängsrichtung ausgeführte Wählbewegung des Schalthebels Zwischenglieder zur Umlenkung dieser Wählbewegung in eine Bewegung des zugeordneten Übertragungsgliedes in Fahrzeuglängsrichtung vorzusehen.

Aus der gattungsgemäßen DE 41 01 010 A1 geht eine Außenschaltvorrichtung hervor, bei der die Schaltbewegung und die Wählbewegung des Schalthebels über zwei Übertragungsglieder auf das Wechselgetriebe übertragen werden. Der Schalthebel ist dabei um eine Schaltachse und um eine rechtwinklig dazu verlaufende Wählachse in zwei zueinander senkrecht gelegenen Ebenen schwenkbar gelagert. Dabei ist der Schalthebel unmittelbar mit einem ersten Übertragungsglied über ein Gelenk verbunden, sodaß auf diese Weise die Schaltbewegung vollzogen werden kann. Ein zweites Übertragungsglied ist unter Zwischenschaltung eines Zahnradgetriebes kinematisch mit dem Schalthebel verbunden. Ein derartiges Zahnradgetriebe erfordert ein Gehäuse, wie es auch in der Figur 1 der DE 41 01 010 A1 dargestellt ist. Die Zahnräder müssen in dem Geäuse ebenso wie die Wellen gelagert werden. Darüber hinaus ist eine Anschlußverbindung zwischen Getriebe und Ausgangsglied vorzusehen, um eine Kopplung der Bauteile zu ermöglichen.
Ein komplettes Getriebe, das vorliegend ein "Winkelumlaufgetriebe" sein soll, wird dabei zur Bewegungsübertragung eingesetzt. Infolge des fertigungstechnischen Aufwandes ergeben sich erhebliche Herstellungskosten.

Aus JP-Abstracts M-1011, 1990, No. 378. JP 2-138572 A1 geht darüber hinaus eine Schaltvorrichtung hervor, die im Aufbau kompliziert und damit fertigungstechnisch aufwendig herzustellen ist. In dieser Schrift werden bei einer Bewegung des Schalthebels (11), die durch Zahnräder übertragbar ist, in Richtung A1, A2 beide Bowdenzüge in entgegengesetzte Richtungen geführt. Bei einer Bewegung des Schalthebels (11) in Richtung B1, B2 sollen die Bowdenzüge hingegen simultan bewegt werden.

Es entspricht dem praktizierten Stand der Technik mehrerer Hersteller von Automobilen, den

Schalthebel um eine quer zur Fahrzeuglängsrichtung liegende Achse schwenkbar in einem Lagerkörper anzuordnen, der seinerseits um eine in Fahrzeuglängsrichtung liegende Achse schwenkbar in dem Gehäuse der Schaltvorrichtung gelagert ist. Ein einseitig sich quer zur Fahrzeuglängsrichtung erstreckender Zapfen greift mit einem Kugelgelenk in einen Gleitstein ein, welcher in dem einen Arm eines Winkelhebels linear verschieblich ist, der seinerseits um eine sich parallel zur Schaltachse erstreckende Achse im Gehäuse gelagert ist und an dessen anderen Arm das Übertragungsglied für die Wählbewegung auf das Wechselgetriebe angreift, so daß sowohl die Schaltbewegung um die Querachse als auch die Wählbewegung um die Längsachse im wesentlichen parallele Längsbewegungen der Übertragungsglieder einerseits für die Schaltbewegung und andererseits für die Wählbewegung bewirken. Die dabei von der gewollten Bewegungsebene abweichenden Bewegungskomponenten werden durch elastische Lagerelemente kompensiert.

Der Erfindung liegt die Aufgabe zugrunde, gestiegenen Anforderungen an die Leichtgängigkeit einer exakt beweglichen Schaltvorrichtung, insbesondere in einem Kraftfahrzeug des gehobenen Komforts, ohne Erhöhung der Herstellungskosten zu entsprechen.

Diese Aufgabe löst die Erfindung durch eine Ausbildung mit den kennzeicnenden Merkmalen des Patentanspruches 1.

Gegenüber dem Stande der Technik wird ein Vorteil darin gesehen, daß die Umlenkung der Wählbewegung durch ein mit der Verzahnung ineinandergreifendes Kegelradsegmentpaar weniger Einzelteile benötigt werden und vor allem gleitende Reibungen vermieden werden, so daß die Schaltung trotz genauester Führung der Schalt- und Wählbewegung leichtgängiger ist. Außerdem können die beiden Kegelradsegmente ohne nachteiligen Einfluß einen vom rechten Winkel abweichenden Winkel zueinander einnehmen, wodurch konstruktiv die Zusammenführung der beiden Übertragungsglieder erleichtert wird, um diese zum Beispiel in einem engen gemeinsamen Hüllrohr unterzubringen.
Als besonders vorteilhaft wird die Möglichkeit angesehen, den den Schalthebel aufnehmenden Lagerkörper mit einem einteiligen Arm zu versehen, an dessen Ende ein Kegelradsegment einteilig angeformt ist.
Der Lagerkörper kann kostengünstig als Kunststoff-Formteil hergestellt werden.

Besondere Einzelheiten der Erfindung ergeben sich aus den Ansprüchen 2 bis 5.

In der Zeichnung ist ein Ausführungsbeispiel der Erfindung dargestellt. Es zeigen:
- Figur 1: einen Querschnitt durch die Schaltvorrichtung in der Ebene der Schaltachse,

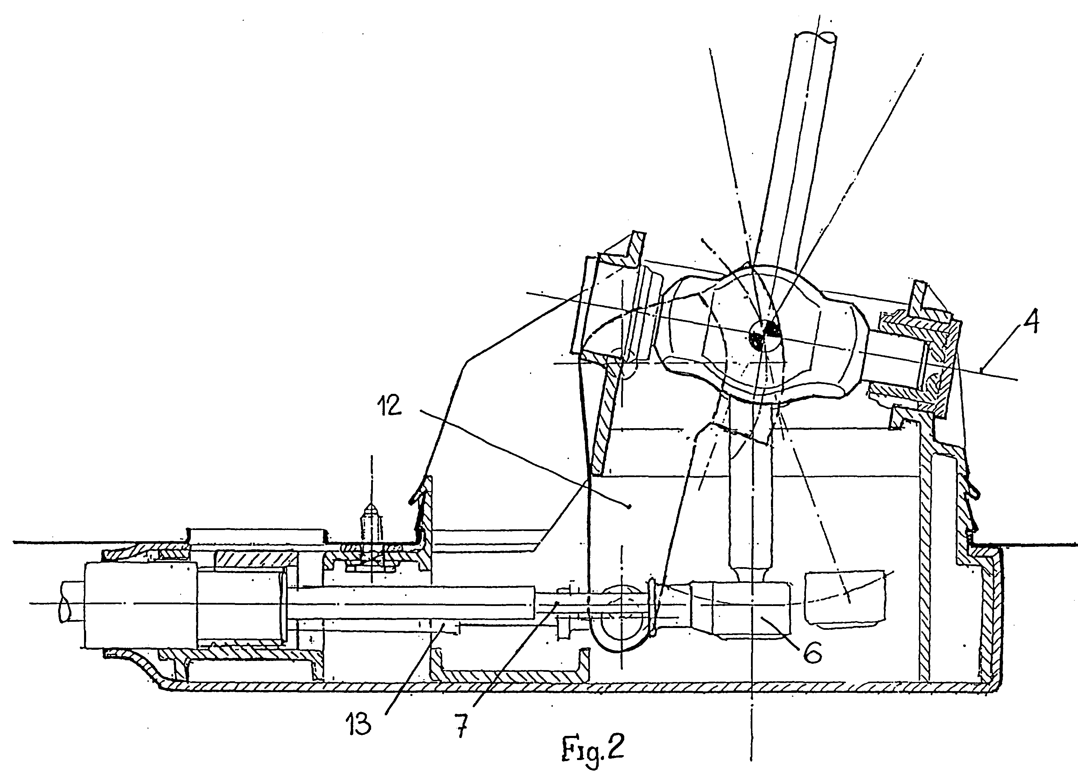

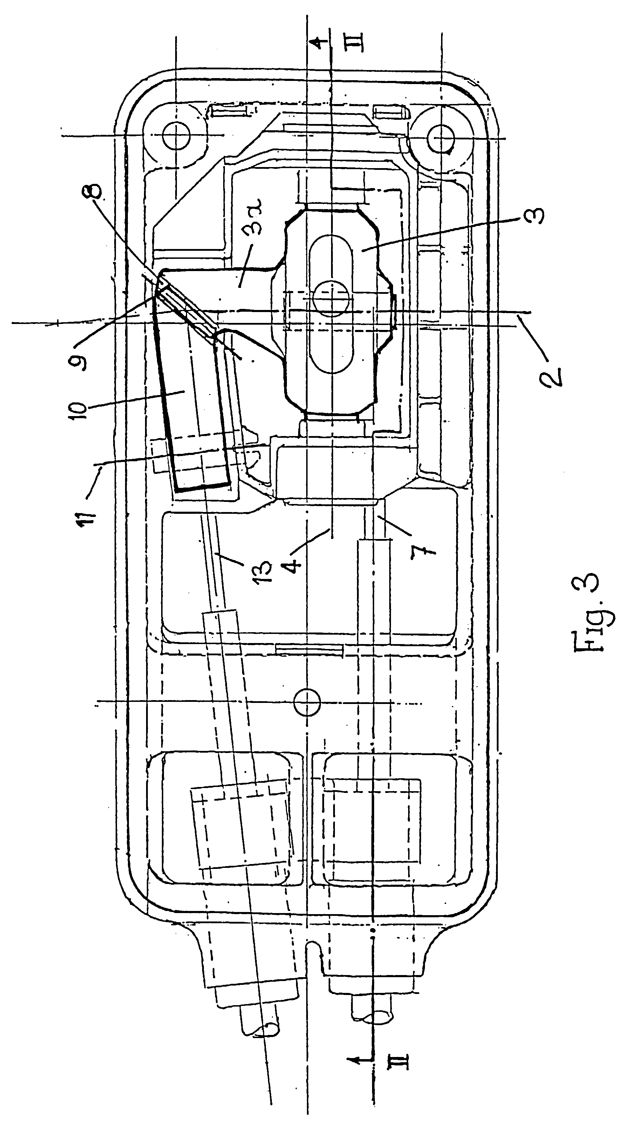

- Figur 2: einen Längsschnitt durch das Gehäuse der Schaltvorrichtung entlang der Linie II - II in Figur 3 und
- Figur 3: eine Draufsicht auf das geöffnete Gehäuse der Schaltvorrichtung.

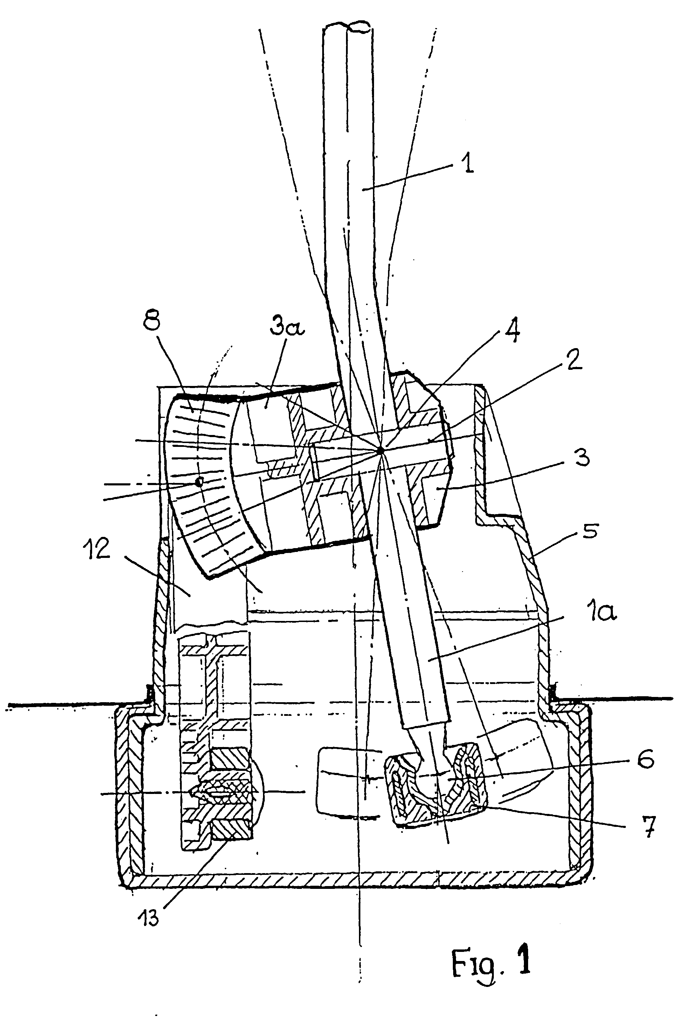

Der von Hand betätigbare Schalthebel 1 der dargestellten Außenschaltvorrichtung für das in der Zeichnung nicht dargestellte Wechselgetriebe eines Kraftfahrzeugs ist um die meistens quer zur Fahrzeuglängsrichtung angeordnete Schaltachse 2 in einem Lagerkörper 3 schwenkbar gelagert, der seinerseits um eine in Fahrzeuglängsrichtung in gleicher Ebene liegende Wählachse 4 in dem Gehäuse 5 der Schaltvorrichtung ebenfalls schwenkbar gelagert ist.
Der Schalthebel 1 durchsetzt eine Kulisse im Deckel des Gehäuses 5, so daß sowohl die Schaltbewegungen in Ebenen parallel zur Fahrzeuglängsrichtung als auch die Wählbewegung in einer Ebene quer zur Fahrzeuglängsrichtung geführt und begrenzt sind. Wählbewegungen sind durch Verschwenkung des Lagerkörpers 3 um die Wählachse in mehreren winklig zueinanderliegenden Ebenen möglich, wie es in der Figur 1 symbolisch dargestellt ist. An einer sich nach unten über die Wählachse 4 hinaus erstreckenden Verlängerung 1a des Schalthebels ist mittels eines Kugelgelenks 6 ein für die Übertragung der Schaltbewegungen verwendeter Seilzug 7 verbunden, insbesondere ein Bowdenzug, bei dem eine Drahtseele in einem biegsamen Hüllrohr axial beweglich geführt ist. Seitlich an dem Lagerkörper 3 erstreckt sich ein Arm 3a, an dem ein Kegelradsegment 8 ausgebildet ist, dessen Mittelpunkt auf die Wählachse 4 bzw. auf den Schnittpunkt der Wählachse 4 mit der Schaltachse 2 ausgerichtet ist. In die Verzahnung des Kegelradsegments 8 greift die Verzahnung eines zweiten Kegelradsegments 9 ein, welches an dem einen Arm 10 eines Winkelhebels ausgebildet ist, welcher seinerseits um eine Querachse 11 in dem Gehäuse 5 schwenkbar gelagert ist und an dessen anderen Hebelarm 12 der zur Übertragung der Wählbewegungen auf das Wechselgetriebe bestimmte Seilzug 13 angelenkt ist. Eine Verschwenkung des Schalthebels 1 mit dem Lagerkörper 3 um die Wählachse führt durch die Kegelsegmentverzahnung zu einer Verschwenkung des Winkelhebels 10,12 um die Querachse 11 und somit zu einer Betätigung des Seilzuges 13. Eine Verschwenkung des Schalthebels 1 um die Schaltachse 2 bewirkt demgegenüber in der jeweils ausgewählten Schaltebene eine Betätigung des Seilzuges 7. Da der Arm 3a mit dem Lagerkörper 3 einstückig aus Kunststoff hergestellt sein kann, wird für die Umlenkung der Wählbewegung lediglich der Winkelhebel mit den beiden Hebelarmen 10 und 12 benötigt. Besonders vorteilhaft ist es auch, den Winkelhebel mit den Hebelarmen 10 und 12 und dem Kegelradsegment 9 als einteiliges Kunststoff-Formteil herzustellen.
Bei der Durchführung von Wählbewegungen entsteht keine gleitende Reibung. Die Verzahnungen der Kegelradsegmente 8 und 9 führen eine Abwälzbewegung durch.

### BEZUGSZEICHENLISTE:

- 1: Schalthebel
- 1a: Verlängerung
- 2: Schaltachse
- 3: Lagerkörper
- 3a: Arm
- 4: Wählachse
- 5: Gehäuse
- 6: Kugelgelenk
- 7: Seilzug
- 8: Kegelradsegment
- 9: Kegelradsegment
- 10: Hebelarm
- 11: Querachse
- 12: Hebelarm
- 13: Seilzug

## Patentansprüche

1. Außenschaltvorrichtung für ein Wechselgetriebe eines Kraftfahrzeugs, bei der:
- ein Schalthebel (1) in einem Gehäuse (5) um eine Schaltachse (2) und um eine dazu etwa im rechten Winkel liegende Wählachse (4) schwenkbar gelagert ist,
- die Schaltbewegung durch ein erstes Übertragungsglied (7) und die Wählbewegung über Zahnräder auf ein zweites Übertragungsglied (13) auf das Wechselgetriebe übertragen wird, die beide etwa in gleicher Richtung beweglich sind,
- Hebelarme (10,12) zur Umlenkung der Bewegung des Schalthebels (1) um die Wählachse (4) auf das zweite Übertragungsglied (13) vorgesehen sind,
- die Umlenkung der Wählbewegung um die Wählachse (4) durch zwei mit ihrer Verzahnung ineinandergreifende Kegelradsegmente (8,9) erfolgt, von denen das eine Kegelradsegment (8), bezogen auf die Wählachse (4), seitlich an einem Arm (3a) eines den Schalthebel (1) aufnehmenden Lagerkörpers (3), angeordnet und das andere Kegelradsegment (9) in dem Gehäuse (5) um eine winklig zur Wählachse (4) liegende Querachse (11) schwenkbar gelagert und zur Übertragung der Wählbewegung auf das Wechselgetriebe mit dem Übertragungsglied (13) verbunden ist,
**dadurch gekennzeichnet, daß**
- das Kegelradsegment (9) an einem Hebelarm (10) eines in dem Gehäuse schwenkbar gelagerten Winkelhebels angeformt ist, an dessen anderem Hebelarm (12) das Übertragungsglied (13) angreift,
- der Lagerkörper (3), einschließlich des Armes (3a), mit dem daran angeformten Kegelradsegment (8), als einteiliges Kunststoff-Formteil ausgebildet und der Lagerkörper (3) um die mit der Schaltachse (2) in gemeinsamer Ebene liegende Wählachse (4) schwenkbar in dem Gehäuse (5) gelagert ist.

2. Außenschaltvorrichtung nach Anspruch 1,
dadurch gekennzeichnet, daß
zur Übertragung der Schaltbewegung auf das Wechselgetriebe zwei etwa parallel zueinander verlaufende Seilzüge (7,13), insbesondere Bowdenzüge, vorgesehen sind, von denen einer mit einer nach unten über die Schaltachse (2) hinausragenden Verlängerung (1a) des Schalthebels (1) und der andere mit dem etwa parallel zu dieser Verlängerung (1a) sich erstreckenden Hebelarm (12) des in dem Gehäuse (5) um die Querachse (11) schwenkbar gelagerten Winkelhebels (10,12) verbunden ist, wobei die Seilzüge (7, 13) in ein gemeinsames Hüllrohr eingesetzt sind.

3. Außenschaltvorrichtung nach Anspruch 1 oder 2,
dadurch gekennzeichnet, daß
das Kegelradsegment (8) und das Kegelradsegment (9) in einem von einem rechten Winkel abweichenden Winkel zueinander angeordnet sind.

## Claims

1. External gearshift device for a manual transmission of a motor vehicle, in which:
- a gear lever (1) is supported in a housing (5) so as to be capable of swivelling about a shift axis (2) and about a selection axis (4) approximately at right angles thereto,
- the shift motion is transmitted by a first transmission element (7) and the selection motion is transmitted via gearwheels to a second transmission element (13) to the manual transmission, which are both movable approximately in the same direction,
- lever arms (10, 12) are provided for deflecting the motion of the gear lever (1) about the selection axis (4) to the second transmission element (13),
- the deflection of the selection motion about the selection axis (4) is effected by means of two mutually meshed bevel gear segments (8, 9), of which the one bevel gear segment (8) is disposed, in relation to the selection axis (4), laterally on an arm (3a) of a bearing body (3) accommodating the gear lever (1) and the other bevel gear segment (9) is supported in the housing (5) so as to be capable of swivelling about a transverse axis (11) lying at an angle to the selection axis (4) and for transmitting the selection motion to the manual transmission is connected to the transmission element (13),
**characterized in that**
- the bevel gear segment (9) is formed on a lever arm (10) of an angle lever, which is pivotally supported in the housing and upon the other lever arm (12) of which the transmission element (13) acts,
- the bearing body (3), including the arm (3a), with the bevel gear segment (8) formed thereon, takes the form of an integral plastic moulded part and the bearing body (3) is supported in the housing (5) so as to be capable of swivelling about the selection axis (4), which is situated together with the shift axis (2) in a common plane.

2. External gearshift device according to claim 1, characterized in that
for transmitting the shift motion to the manual transmission two sheathed cables (7, 13), in particular Bowden cables, extending parallel to one another are provided, of which one is connected to an extension (1a) of the gear lever (1) projecting down beyond the shift axis (2) and the other is connected to the lever arm (12), which extends approximately parallel to said extension (1a), of the angle lever (10, 12) supported in the housing (5) so as to be capable of swivelling about the transverse axis (11), wherein the sheathed cables (7, 13) are inserted into a common cladding tube.

3. External gearshift device according to claim 1 or 2, characterized in that
the bevel gear segment (8) and the bevel gear segment (9) are disposed at an angle relative to one another, which differs from a right angle.

## Revendications

1. Dispositif de commande externe d'une boîte de vitesse d'un véhicule automobile, dans lequel :
- un levier de commande (1) est monté dans un boîtier (5) de manière à pouvoir pivoter autour d'un axe de commande (2) et autour d'un axe de sélection (4) qui fait un angle sensiblement droit avec celui-ci,
- le mouvement de commande est transmis à la boîte de vitesse par un premier élément de transmission (7) et le mouvement de sélection est transmis via des roues dentées sur un second élément de transmission (13), lesdits éléments pouvant tous deux se déplacer sensiblement dans le même sens,
- des bras de levier (10, 12) sont prévus pour renvoyer le mouvement du levier de commande (1) autour de l'axe de sélection (4) sur le second élément de transmission (13),
- le renvoi du mouvement de sélection autour de l'axe de sélection (4) se fait au moyen de deux segments de roue conique (8, 9) s'engageant l'un dans l'autre par leur denture, le premier segment de roue conique (8) étant agencé, par rapport à l'axe de sélection (4), latéralement sur un bras (3a) d'un corps de palier (3) recevant le levier de commande (1) et l'autre segment de roue conique (9) étant monté dans le boîtier (5) de manière à pouvoir pivoter autour d'un axe transversal (11) faisant un angle avec l'axe de sélection (4) et étant relié à l'élément de transmission (13) pour le transfert du mouvement de sélection à la boîte de vitesse,
caractérisé en ce que :
- le segment de roue conique (9) est formé sur un bras de levier (10) d'un levier coudé monté à pivotement dans le boîtier, sur l'autre bras de levier (12) duquel s'engage l'élément de transmission (13),
- le corps de palier (3), y compris le bras (3a), avec le segment de roue conique (8) qui y est formé, se présente sous la forme d'une seule pièce moulée de matière plastique et le corps de palier (3) est monté dans le boîtier (5) de manière à pouvoir pivoter autour de l'axe de sélection (4) se trouvant dans un plan commun avec l'axe de commande (2).

2. Dispositif de commande externe selon la revendication 1, caractérisé en ce que, pour transmettre le mouvement de commande à la boîte de vitesse, il est prévu deux câbles de transmission (7, 13), en particulier des câbles Bowden, s'étendant sensiblement parallèlement l'un à l'autre, dont l'un est relié à un prolongement (1a) du levier de commande faisant saillie de l'axe de commande (2) vers le bas et l'autre est relié au bras de levier (12), s'étendant plus ou moins parallèlement à ce prolongement (1a), du levier coudé (10, 12) monté dans le boîtier (5) à pivotement autour de l'axe transversal (11), les câbles de transmission (7, 13) étant insérés dans un tube de gainage commun.

3. Dispositif de commande externe selon la revendication 1 ou 2, caractérisé en ce que le segment de roue conique (8) et le segment de roue conique (9) sont agencés mutuellement en faisant un angle qui s'écarte d'un angle droit.
